# EUROPÄISCHE PATENTSCHRIFT

(11) **EP 4 022 211 B1**
(45) Veröffentlichungstag und Bekanntmachung des Hinweises auf die Patenterteilung: **18.06.2025**
(21) Anmeldenummer: 20753700.2
(22) Anmeldetag: 03.08.2020
(51) Int. Cl.: F16M 7/00, A47B 91/02

(54) **MASCHINENFUSS FÜR BEHÄLTERBEHANDLUNGSMASCHINEN**
MACHINE FOOT FOR CONTAINER HANDLING MACHINES
PIED DE MACHINE POUR MACHINES DE MANUTENTION DE CONTENANTS

(30) Priorität: 26.08.2019 DE 102019122801
(43) Veröffentlichungstag der Anmeldung: 06.07.2022
(73) Patentinhaber: KHS GmbH, 44143 Dortmund (DE)
(72) Erfinder: BEISEL, Michael, 55444 Schöneberg (DE)
(86) Internationale Anmeldenummer: PCT/EP2020/071779
(87) Internationale Veröffentlichungsnummer: WO 2021/037486

(56) Entgegenhaltungen:
- EP-A1- 1 021 972
- CH-A2- 698 093
- US-A1- 2006 186 288
- US-A1- 2011 187 247
- US-B1- 6 520 461

## Beschreibung

Die Erfindung bezieht sich auf einen Maschinenfuß für Behälterbehandlungsmaschinen, insbesondere auf einen hygienischen, höhenausgleichbaren Maschinenfuß für Behälterbehandlungsmaschinen.

Maschinenfüße sind hinlänglich bekannt. Grundsätzlich werden Maschinenfüße zum Aufstellen von Maschinen bzw. Anlagen eingesetzt, wobei die Maschinenfüße in der Regel an Gestellteile der Maschine oder an den Maschinenkörper montiert werden können und als lasttragende Maschinenfüße der Last der jeweiligen Maschine bzw. dem durch die Last einwirkenden Druck standhalten müssen. Solche Maschinenfüße sind meist höhenausgleichbar ausgebildet.

Bei Maschinen in hygienisch sensiblen Bereichen, etwa in der Lebensmittelherstellung und -verarbeitung sowie in der pharmazeutischen Industrie, müssen diese Maschinenfüße auch den in diesen Bereichen geltenden, strengen Hygieneanforderungen genügen. Dabei sind Konstruktionsstandards einzuhalten, die durch anzuwendende Maschinenrichtlinien und entsprechende Hygienerichtlinien vorgegeben und festgelegt sind.

Derartige Hygienerichtlinien werden beispielsweise von bestimmten Organisationen oder staatlichen Stellen, wie zum Beispiel von der "European Hygienic Engineering & Design Group" (EHEDG), der "3-A Sanitary Standards, Inc." (3-A) oder auch vom "US Department of Agriculture" (USDA) herausgegeben. Besonders wichtig für einzelne Maschinenteile, insbesondere auch für Maschinenfüße ist hierbei eine Ausgestaltung, die eine leichte Reinigbarkeit ermöglicht und entsprechende Sauberkeitserfordernisse erfüllt, wobei im Besonderen darauf zu achten ist, dass sich Rückstände, beispielsweise Produktrückstände, nicht ablagern können und allfällige Verschmutzungen leicht und gründlich entfernt werden können, so dass insbesondere auch einer unerwünschten Verkeimung sicher vorgebeugt werden kann.

Grundsätzlich sind höhenverstellbare Nivellierfüße oder Höhenausgleichsfüße bekannt und werden etwa als Tischbeine bei höhenanpassbaren Schreibtischen vorgesehen, wie beispielsweise in EP 1 021 972 A12 beschrieben.

Aus dem Stand der Technik sind auch Nivellierfüße oder Höhenausgleichsfüße für derartige Hygieneanwendungen, wie oben erwähnt, bekannt. Beispielsweise offenbart die Druckschrift DE 10 2016 118 047 A1 einen hygienischen Höhenausgleichsfuß, der einen Anschlussfuß mit Fußplatte und Schaft sowie eine den Schaft umschließende Verstellhülse umfasst. An dem Schaft ist ein Außengewinde und an der Verstellhülse ein korrespondierendes Innengewinde vorgesehen. Durch Drehen der Verstellhülse gegenüber dem Schaft kann die Verstellhülse nach oben und unten verschoben werden. Über einen zusätzlich vorgesehenen Flansch kann auf der Verstellhülse ein hohlzylinderartiger Gerätestützfuß lastend aufgelagert werden. Zur Verbessrung der hygienischen Eigenschaften ist eine axiale Erstreckung des Außengewindeabschnittes und eine Länge der Verstellhülse so gewählt, dass das Außengewinde unabhängig von der Verstellung der Verstellhülse zu keinem Zeitpunkt frei liegt.

In der US 7,159,829 B1 ist eine Trägereinheit offenbart, die ein röhrenförmiges oberes Teil und ein röhrenförmiges unteres Teil aufweist, wobei das untere Teil für eine einstellbare vertikale Bewegung teleskopisch im oberen Teil montiert ist. Das obere Teil umfasst einen Kunststoffstützkörper, der von einer Edelstahlstützhülse umgeben ist. Zudem ist ein Stahlbolzen mit Außengewinde am Stützkörper angebracht. Das untere Teil umfasst einen röhrenförmigen Fuß aus rostfreiem Stahl mit einem Kunststoffgleitkörper, der am unteren Ende des unteren Teils angebracht ist, und einem Metalleinsatz, der am oberen Ende des unteren Teils angebracht ist. Besagter Metalleinsatz hat einen zentralen, sich vollständig durch den Metalleinsatz erstreckenden Kanal mit Innengewinde. Der Metalleinsatz wird auf das untere Ende des Stahlbolzens geschraubt, um eine vertikale Bewegung entlang des Bolzens zu ermöglichen.

Aus der WO 2015/192849 A1 geht ferner ein höhenausgleichbarer Maschinenfuß für Hygieneanwendungen hervor, der ebenfalls eine mit einem Standfuß gekoppelte Spindel mit Außengewindeabschnitt und eine die Spindel axial umschließende zylindrische Lasthülse mit Innengewindeabschnitt umfasst. Die Lasthülse ist durch Drehen gegenüber der Spindel in vertikaler Richtung relativ zur Spindel bewegbar. Durch entsprechenden Einsatz von ringförmigen Dichtungen wird insbesondere der Gewindeabschnitt vor Verschmutzungen geschützt.

Bei der oben beschriebenen, aus dem Stand der Technik bekannten Lösung besteht die Spindel im Wesentlichen aus einem Gewindeteil und einem Passungsteil, wobei ein unterer Teil der verstellbaren Lasthülse mit einer innenliegenden Dichtung auf dem Passungsteil der Spindel abdichtet. Oberseitig wird an der Lasthülse ebenfalls eine Dichtung vorgehalten welche zur horizontalen Fläche abdichtet.

Nachteilig eignet sich diese einfache Lösung gemäß der beschriebenen, bestehenden Ausführung jedoch nur für kleine Verstellbereiche und für Spindeln mit relativ geringen Durchmessern. Im Falle von Behälterbehandlungsmaschinen, wie beispielsweise Füllmaschinen werden jedoch oft sehr viel größere Verstellbereiche und Ausführungen sowie Spindeln mit großen Durchmessern benötigt. Auch ist es in dem hygienisch sensiblen Bereich der Lebensmittelproduktion und -verarbeitung besonders im Hinblick auf die dort geltenden Hygienevorschriften wünschenswert, dass auch neben den empfindlichen Gewindeabschnitten andere bzw. sämtliche Funktionselemente und/oder überstehende Teile verdeckt ausgebildet sind. Daher besteht trotz der bekannten Lösungen Bedarf an verbesserten Maschinenfüßen.

Eine Aufgabe der Erfindung ist es, einen Maschinenfuß für Behälterbehandlungsmaschinen aufzuzeigen, der die Nachteile der aus dem Stand der Technik bekannten Lösungen behebt und der trotz konstruktiv einfacher und kostensparender Herstellbarkeit die geltenden Hygieneauflagen erfüllt.

Zur Lösung dieser Aufgabe ist ein Maschinenfuß für Behälterbehandlungsmaschinen entsprechend den Merkmalen des Patentanspruches 1 sowie eine Schutzhülle mit den Merkmalen des Patentanspruches 16 ausgebildet. Vorteilhafte Weiterbildungen der Erfindung sind in den abhängigen Ansprüchen angegeben. Dabei sind alle beschriebenen Merkmale für sich oder in beliebiger Kombination grundsätzlich Gegenstand der Erfindung, unabhängig von ihrer Zusammenfassung in den Ansprüchen oder deren Rückbeziehung. Weiterhin werden die Merkmale bzw. Merkmalskombinationen der Patentansprüche zu einem Bestandteil der Beschreibung erklärt.

Die vorliegende Erfindung stellt einen Maschinenfuß für Behälterbehandlungsmaschinen umfassend zumindest eine sich entlang einer Hauptachse erstreckende, höhenausgleichbare Trageinheit und wenigstens eine koaxial zur Trageinheit angeordnete Stützeinheit bereit. Die Trageinheit umfasst dabei zumindest eine mit einer Basisplatte verbundene Tragspindel und eine die Tragspindel abschnittsweise axial umschließende Lasthülse, wobei die Tragspindel zumindest einen Außengewindeabschnitt und die Lasthülse wenigstens einen korrespondierenden Innengewindeabschnitt aufweist. Die Lasthülse ist verstellbar mit der Tragspindel verbunden. Die Stützeinheit lastet auf der Lasthülse und ein oberseitiger freier Endabschnitt der Tragspindel ragt axial in einen Innenraum der Stützeinheit hinein. Der Maschinenfuß zeichnet sich insbesondere dadurch aus, dass er ferner eine koaxial angeordnete, umfänglich umlaufende Schutzhülse aufweist, wobei die Schutzhülse in einer vertikalen Richtung verschiebbar an der Stützeinheit angeordnet ist. Zumindest in einer vertikalen Endstellung deckt die Schutzhülse wenigstens die Trageinheit gegen die Umgebung ab.

Der Maschinenfuß gemäß der vorliegenden Erfindung ist insbesondere ein höhenverstellbarer oder höheneinstellbarer Maschinenfuß oder Stellfuß bzw. ein Nivellierfuß oder Höhenausgleichsfuß, der insbesondere für Hygieneanwendungen geeignet und eingerichtet ist und daher auch als hygienischer Maschinenfuß oder Hygienefuß für Maschinen verstanden werden kann.

Insbesondere eignet sich der vorliegende Maschinenfuß für Behälterbehandlungsmaschinen, welche im Sinne der vorliegenden Erfindung solche Maschinen oder Teile einer Anlage sind, die beispielsweise in der Getränkeindustrie zur Behandlung von mit Flüssigkeiten zu befüllenden Behältern verwendet werden. Neben bekannten Behälter-Reinigungsmaschinen, Etikettier- und/oder Druckmaschinen, Verschließmaschinen etc. sind insbesondere auch solche Behälterbehandlungsmaschinen umfasst, die beispielsweise in hygienisch empfindlichen Bereichen oder etwa in sterilen bzw. aseptischen Bereichen einer Anlage aufgestellt sind, wie Blasmaschinen, Füllmaschinen, Sterilisatoren etc. Auch kann der vorliegende Maschinenfuß beispielsweise im Zusammenhang mit Transport- oder Förderstrecken, Pufferstrecken und dergleichen verwendet werden.

Der höheneinstellbare, hygienische Maschinenfuß ist als lasttragender Maschinenfuß ausgebildet, wobei die Behälterbehandlungsmaschine im Wesentlichen die Last darstellt und der Maschinenfuß unterseitig an der Behälterbehandlungsmaschine montierbar ist, beispielsweise indem der Maschinenfuß unterseitig an einem Gestell- oder Trägerteil der Behälterbehandlungsmaschine oder am Maschinenkörper bzw. an einem Teil des Maschinenkörpers befestigt wird. Aufgrund der Höheneinstellbarkeit kann vorteilhaft eine insbesondere einfache Anpassung an die Bodenbeschaffenheit am Aufstellort einer Behälterbehandlungsmaschine bzw. an vorgegebene Bedingungen in Bezug auf den Untergrund in einer Produktionshalle erfolgen. Zumindest über einen bestimmten Verstellbereich kann durch die Höhenanpassung oder Höheneinstellung auch die Arbeitshöhe der entsprechenden Maschine bestimmt werden. Auch kann eine beispielsweise für bestimmte Anwendungen erforderliche Neigung, nämlich eine geneigte Ausrichtung der Behälterbehandlungsmaschine oder aber eine exakte horizontale Ausrichtung auf einfachste Weise realisiert und präzise eingestellt werden.

Ganz besonders vorteilhaft bewirkt die Schutzhülse zumindest in der vertikalen Endstellung, dass alle unteren zum Boden hin befindlichen Bauteile der Trageinheit komplett abgedeckt bzw. verkleidet und dadurch gegen die Umgebung, insbesondere gegenüber dem umgebenden Raum geschützt sind. Insbesondere sind dabei auch alle funktionellen Komponenten geschützt, die beispielsweise für die Höheneinstellbarkeit oder für eine mögliche Verankerung des Maschinenfußes im Hallenboden vorhanden sind.

Die Schutzhülse deckt somit zumindest in der vertikalen Endstellung alle offenstehenden Komponenten gesamtheitlich ab, nämlich insbesondere diejenigen Komponenten der Trageinheit, die nicht im Innenraum der Stützeinheit aufgenommen sind, sondern außerhalb der Stützeinheit angeordnet und nicht von dieser abgedeckt oder umgeben sind. Dadurch sind vorteilhaft alle Komponenten der Trageinheit effektiv und sicher gegen Verunreinigung und Verschmutzung sowie gegen ein Eindringen bzw. Ablagern von Produkt- oder Behandlungsmittelrückständen geschützt. Die Schutzhülse kann im Wesentlichen als Verkleidung oder Abdeckung oder Schutzeinrichtung verstanden werden, welche die Komponenten der Trageinheit, insbesondere alle funktionellen Komponenten, gegenüber dem umgebenden Raum abschirmt. Dennoch ist aufgrund der in vertikaler Richtung verschiebbaren Anordnung der Schutzhülse an der Stützeinheit besonders vorteilhaft eine leichte Revision bzw. ein Servicezugang ermöglicht.

Durch die vorhandene Schutzhülse ist es vorteilhaft ferner möglich, den Maschinenfuß mit einem im Vergleich zu den aus dem Stand der Technik bekannten Lösungen größeren Verstellbereich zur Höheneinstellung zu realisieren. Beispielsweise kann sich nämlich der Außengewindeabschnitt der Tragspindel entlang der Hauptachse über einen großen Teil der Länge der Tragspindel, beispielsweise über mehr als ein Viertel oder mehr als ein Drittel der Länge oder etwa über die Hälfte der Länge oder über mehr als die Hälfte oder über etwa zwei Drittel der Länge erstrecken, da die gesamte Tragspindel durch die mit der Stützeinheit zusammenwirkende Schutzhülse abgedeckt ist und die funktionellen Gewindeabschnitte effektiv geschützt sind. Beispielsweise kann ein Verstellbereich von rund 100 mm realisiert werden. Auch können bei dem Maschinenfuß gemäß der vorliegenden Erfindung vorteilhaft Tragspindeln mit größerem Spindeldurchmesser verwendet werden, wodurch beispielsweise auch die Traglastbeständigkeit bzw. Tragfähigkeit erhöht ist.

Gemäß einer vorteilhaften Ausführungsform der Erfindung sind die Schutzhülse und die Stützeinheit im Wesentlichen zylinderförmig, insbesondere hohlzylinderförmig ausgebildet und sind zumindest über einen vorgegebenen Verschiebebereich teleskopartig ineinander- und auseinanderschiebbar angeordnet. In dieser Anordnung umläuft die Schutzhülse beispielsweise konzentrisch die Stützeinheit, wobei eine innere Wandungsfläche der Schutzhülse und eine Außenseite der Stützeinheit einander zugewandt sind. Zur vertikalen Verschiebbarkeit sind Stützeinheit und Schutzhülle gleitend gekoppelt.

Besonders bevorzugt ist wenigstens an einem oberseitigen Hülsenende der Schutzhülse zumindest ein erstes Dichtelement vorgesehen, wobei das Dichtelement dichtend zwischen der Außenseite der Stützeinheit und der Schutzhülse angeordnet ist. Das erste Dichtelement bewirkt vorteilhaft am oberseitigen Hülsenende eine Abdichtung gegen die Stützeinheit derart, dass keine Rückstände, Verschmutzungen oder dergleichen, beispielsweise auch entlang des Stützelementes herablaufende Flüssigkeiten, in den Innenraum der Schutzhülle gelangen. Insbesondere ist das Dichtelement dazu ausgebildet und eingerichtet, dass es zwar in Dichtlage mit der Außenseite der Stützeinheit angeordnet ist, gleichzeitig aber beim Verschieben der Schutzhülse in vertikaler Richtung ein Gleiten des Dichtelementes an der Außenseite der Stützeinheit möglich ist.

Gemäß einer weiteren bevorzugten Ausführungsform der Erfindung ist im Bereich eines unterseitigen Hülsenendes der Schutzhülse wenigstens ein zweites Dichtelement vorgesehen, wobei das Dichtelement dichtend zwischen einer Oberfläche der Basisplatte und der Schutzhülse angeordnet ist. Insbesondere bei Ausbildung zweier Dichtelemente kann eine vollständig dichtende Abdeckung aller Komponenten der Trageinheit verwirklicht werden. In dieser bevorzugten Ausführungsform ist die Schutzhülse somit mit zwei sich in axialer Richtung gegenüberliegenden Dichtungen ausgebildet.

Das erste und/oder das zweite Dichtelement sind dabei besonders bevorzugt ringförmig in Form eines Dichtringes ausgebildet. Dabei weist die Schutzhülse insbesondere bevorzugt im Bereich ihres oberseitigen Hülsenendes und/oder im Bereich ihres oberseitigen Hülsenendes eine umlaufende Nut zur wenigstens teilweisen Aufnahme des Dichtringes auf. Die Dichtelemente können alternativ jedoch auch als Dichtlippen ausgeführt sein. Die Dichtelemente können aus sämtlichen dafür geeigneten Materialien hergestellt sein, insbesondere aus geeigneten Materialien, die im Lebensmittelbereich zugelassen sind. Beispielsweise können die Dichtungen aus Silikon sein.

Vorteilhaft deckt die Schutzhülse in der vertikalen Endstellung die Trageinheit dichtend, insbesondere vollständig und dichtend gegen die Umgebung ab.

Gemäß einer weiteren bevorzugten Ausführungsform der Erfindung ist am unterseitigen Hülsenende der Schutzhülse zumindest ein Verbindungsabschnitt zum Herstellen einer lösbaren Verbindung mit der Basisplatte vorgesehen. Eine lösbare Verbindung zwischen dem Verbindungsabschnitt der Schutzhülse und der Basisplatte kann im vorliegenden Verständnis auch als einfacher Kontakt zwischen einem freien Rand des Verbindungsabschnittes bzw. der Schutzhülle und einer Oberfläche der Basisplatte verstanden werden. Beispielsweise kann ein solcher Kontakt oder ein solches "In-Kontakt-Stehen" durch Auflage oder Anlage des unteren Randes auf der Basisplatte realisiert sein. Auch kann der Verbindungsbereich vorzugsweise derart ausgebildet sein, dass er buchsenartig über die Basisplatte geschoben bzw. auf die Basisplatte aufgesteckt werden kann.

Bevorzugt ist der Verbindungsabschnitt zum Herstellen einer formschlüssigen lösbaren Verbindung mit der Basisplatte, insbesondere zum Herstellen einer Rastverbindung oder Schnappverbindung ausgebildet und weist dazu wenigstens einen als Rastnase dienenden Vorsprungsbereich auf. Der mindestens eine Vorsprungsbereich kann dabei vorzugsweise eine Wirkverbindung mit einem an der Basisplatte vorgesehenen korrespondierenden Rastelementabschnitt eingehen, beispielsweise mit einer Schulter oder Rippe der Basisplatte, insbesondere mit einer umlaufenden Schulter oder Rippe, wie zum Beispiel einer Ringschulter oder Ringrippe.

Zur Positionierung und zur Lagefixierung der Schutzhülse kann diese durch vertikale Verschiebung entlang der Stützeinheit verschoben werden, bis die Schutzhülse in der vertikalen Endstellung alle Komponenten der Trageinheit gegen den Außenbereich abdichtet. Die so übergeschobene abdichtende Schutzhülse kann schließlich zur Lagefixierung beispielsweise mittels der oberhalb beschriebenen Rast- oder Schnappmechanismen auf einfache Weise auf die Basisplatte geclipst werden. Einstell- oder Wartungsarbeiten können jedoch durch Lösen der Rast- oder Schnappverbindung und entsprechende Verlagerung bzw. Verschiebung nach oben jederzeit wieder vorgenommen werden.

Gemäß einer weiteren bevorzugten Ausführungsform der Erfindung ist an einem der Trageinheit abgewandten maschinenseitigen Ende der Stützeinheit ein Befestigungsabschnitt für die Befestigung an der Behälterbehandlungsmaschine vorgesehen. Beispielsweise ist der Befestigungsabschnitt als deckel- oder plattenartiges Anschlussstück bzw. als Anschlussplatte oder Anschlussflansch ausgebildet. Mithilfe geeigneter Befestigungs- und Verbindungsmittel, beispielsweise mittels Verschraubung, kann der Maschinenfuß dabei mit einem Gestellteil oder mit einem Maschinenkörperteil der Behälterbehandlungsmaschine fest verbunden werden.

Die Lasthülse weist vorzugsweise oberseitig einen Kragenabschnitt zur lasttragenden Aufnahme der Stützeinheit auf, wobei die Stützeinheit auf dem Kragenabschnitt auflagert.

Besonders bevorzugt weist die Stützeinheit an einem dem maschinenseitigen Ende gegenüberliegenden Auflageende einen Bodenabschnitt mit einer zentralen Durchgangsöffnung für den Durchgang der Tragspindel auf, wobei der Bodenabschnitt der Stützeinheit auf der Lasthülse, insbesondere auf dem Kragenabschnitt der Lasthülse aufliegt. Bevorzugt ist der Bodenabschnitt mit der Lasthülse, insbesondere mit dem Kragenabschnitt der Lasthülse verbunden. Durch den flächig auf dem Kragenabschnitt auflagernden Bodenabschnitt ist eine gleichmäßige Lastverteilung gegeben. Gleichzeitig können die flächigen Abschnitte beispielsweise mittels einer Schraubverbindung fixiert werden, wodurch eine sichere Verbindung zwischen Stützeinheit und Trageinheit hergestellt werden kann.

Gemäß einer weiteren bevorzugten Ausführungsform der Erfindung ist die Schutzhülse mehrteilig ausgebildet, wobei mehrere halb- oder teilschalenförmige Schutzhülsenteile dichtend, vorzugsweise lösbar und dichtend miteinander verbunden sind, um die umfänglich umlaufende Schutzhülse zu bilden. In einer solchen Ausführungsform kann die Schutzhülle für Revisions- oder Wartungszwecke besonders leicht entfernt und wieder angebracht werden. Auch ist dadurch bei einem möglicherweise notwendigen Ersatz der Schutzhülse eine besonders einfache nachträgliche Montage möglich.

Die Schutzhülse kann aus Metall, insbesondere aus Edelstahl, oder aus einem Kunststoff hergestellt sein. Die Materialien entsprechen dabei vorzugsweise sämtlichen Anforderungen der Lebensmittelindustrie oder pharmazeutischen Industrie und genügen insbesondere den anzuwendenden Hygienevorschriften, wie Richtlinien gemäß 3-A, USDA oder EHEDG. Beispielsweise eignet sich Edelstahl der Klasse AISI 304 oder AISI 316, oder verschiedene Kunststoffe, z.B. Teflon.

Besondere Vorteile ergeben sich darüber, dass die zur Herstellung der Schutzhülse verwendeten Materialien eine glatte Oberflächenbeschaffenheit aufweisen, so dass die Oberflächen insbesondere leicht und gründlich zu reinigen sind. Auch ist das Material so gewählt, dass es eine ausreichende Beständigkeit gegenüber allen im Bereich von Behälterbehandlungsmaschinen eingesetzten und verarbeiteten Produkten und Hilfsmitteln aufweist. Beispielsweise werden korrosionsfeste Materialien mit einer ausreichenden Beständigkeit gegenüber den beispielsweise in der Lebensmittelindustrie regelmäßig verwendeten Reinigungs- und Desinfektionsmitteln verwendet.

Insbesondere bei Verwendung eines Kunststoffs mit elastischen bzw. flexiblen Eigenschaften ist es beispielsweise auch denkbar, dass die Schutzhülse aus einem im Wesentlichen flächigen, jedoch zylinderförmig gebogenen Flachmaterialstück gebildet ist, wobei die freien Längskanten des Flachmaterialstücks aneinander anschließend angeordnet und entlang einer Verbindungslinie oder Nahtlinie dichtend miteinander verbunden, vorzugsweise lösbar und dichtend miteinander verbunden sind. Bei einer solchen Ausführungsform der Schutzhülse kann diese besonders vorteilhaft nachträglich montiert werden, indem bei der separat vorliegenden Schutzhülse zunächst die Verbindung der Längskanten entlang der Verbindungs- oder Nahtlinie gelöst und die Schutzhülse durch leichtes Aufbiegen von der Seite her über die Stütz- und Trageinheit aufgeschoben bzw. um die Stütz- und Trageinheit herum gelegt wird und schließlich die dichtende Verbindung zwischen den Längskanten wieder hergestellt wird.

Gemäß einer weiteren bevorzugten Ausführungsform ist der Maschinenfuß für eine Verankerung im Boden eingerichtet und weist dazu Durchgangsbohrungen in der Basisplatte auf, wobei entsprechende Verankerungsmittel, wie zum Beispiel Schraubstifte, für den verankernden Eingriff in den Boden durch die Durchgangsbohrungen geführt sind. In einer solchen Ausführungsform ist der Maschinenfuß als so genannter erdbebensicherer Maschinenfuß ausgebildet.

Die Erfindung umfasst ferner eine Schutzhülse für einen zumindest eine höheneinstellbare Trageinheit und eine Stützeinheit umfassenden Maschinenfuß, bei dem die Trageinheit zumindest eine mit einer Basisplatte verbundene Tragspindel mit einem Außengewindeabschnitt und eine die Tragspindel abschnittsweise axial umschließende Lasthülse mit wenigstens einem korrespondierenden Innengewindeabschnitt umfasst, bei dem die Lasthülse verstellbar mit der Tragspindel verbunden ist und die Stützeinheit auf der Lasthülse derart lastet, dass ein oberseitiger freier Endabschnitt der Tragspindel axial in einen Innenraum der Stützeinheit hineinragt. Die Schutzhülse ist hohlzylinderförmig ausgebildet und mit der Stützeinheit derart verbindbar, dass die Schutzhülse die Stützeinheit umfänglich umläuft und in einer vertikalen Richtung relativ zur Stützeinheit verschiebbar ist. Die Schutzhülse ist ferner dazu ausgebildet und eingerichtet, um in einem mit der Stützeinheit des Maschinenfußes verbunden Zustand in wenigstens einer vertikalen Endstellung die Trageinheit gegen die Umgebung abzudecken.

Die Erfindung wird im Folgenden anhand der Figuren an Ausführungsbeispielen näher erläutert. Es zeigen:
- Fig. 1: eine grob schematische Darstellung einer Ausführungsform des Maschinenfußes gemäß der vorliegenden Erfindung in einem Längsschnitt entlang der Hauptachse;
- Fig. 2: ausschnittsweise den unteren Teil einer Ausführungsform des Maschinenfußes gemäß der vorliegenden Erfindung;
- Fig. 3: in perspektivischer Ansicht schematisch dargestellt eine Schutzhülse und
- Fig. 4a, b: schematische Querschnittsansichten von weiteren bevorzugten Ausführungsformen der Schutzhülse.

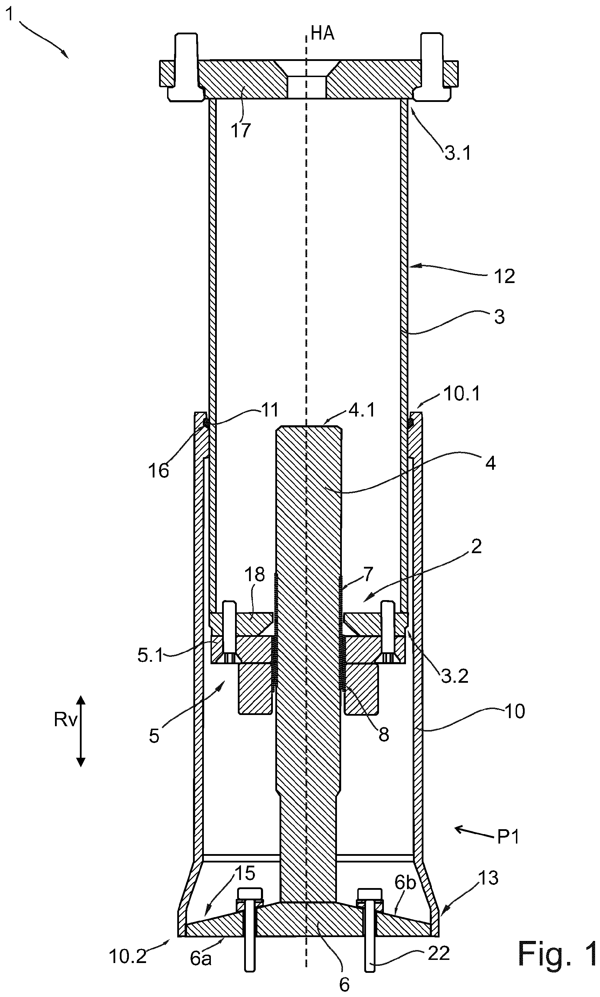

Figur 1 zeigt in einer grob schematischen Schnittdarstellung eine bevorzugte Ausführungsform eines Maschinenfußes 1 gemäß der vorliegenden Erfindung. Der Maschinenfuß 1 erstreckt sich seiner Länge nach entlang einer Hauptachse HA, welche in Gebrauchsstellung des Maschinenfußes 1 vertikal orientiert ist. Der Maschinenfuß 1 kann beispielsweise zum tragenden Abstützen einer nicht näher bezeichneten und nicht in den Figuren dargestellten Behälterbehandlungsmaschine eingesetzt werden, insbesondere zum Aufstellen einer solchen Behälterbehandlungsmaschine auf einem Hallenboden. Der Maschinenfuß 1 ist höhenverstellbar bzw. höhenausgleichbar und daher als so genannter Nivellierfuß ausgebildet.

Der Maschinenfuß 1 weist eine sich entlang der Hauptachse HA erstreckende, höhenausgleichbare Trageinheit 2 und eine koaxial zur Trageinheit 2 angeordnete Stützeinheit 3 auf. Die Trageinheit 2 bildet einen unteren Teil des Maschinenfußes 1, der dem Untergrund zugewandt ist und beispielsweise auf dem Hallenboden aufsteht. Die Stützeinheit 3 bildet einen oberen Teil des Maschinenfußes 1, welcher der Behälterbehandlungsmaschine zugewandt ist und für die Befestigung an der Behälterbehandlungsmaschine zur Verfügung steht.

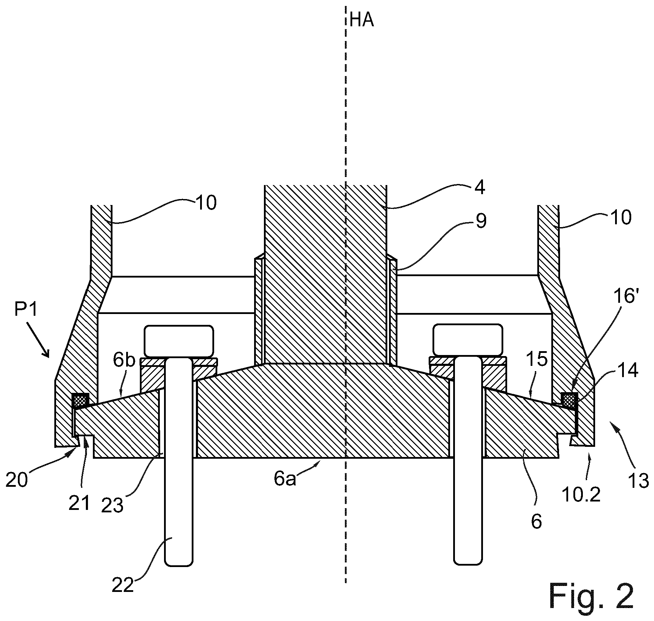

Die höhenausgleichbare Trageinheit 2 weist eine Basisplatte 6 und eine mit der Basisplatte 6 verbundene Tragspindel 4 auf. Die Basisplatte 6, deren Unterseite 6a als Standfläche dient und die auch als Standplatte, Bodenplatte oder Stehfuß bezeichnet werden kann, bildet eine halternde Basis für die Tragspindel 4, welche zum Beispiel mittels einer Aufnahmehalterung 9 (in Figur 1 nicht dargestellt, siehe Figur 2) an der Basisplatte 6, insbesondere im Bereich einer Oberseite 6b der Basisplatte 6 befestigt ist.

Die Tragspindel 4 ist durch eine sich axial entlang der Hauptachse **HA** erstreckende, längliche Spindel gebildet, welche im dargestellten Beispiel einen unteren Abschnitt kleineren Durchmessers und einen daran anschließenden, im Durchmesser erweiterten oberen Abschnitt aufweist. Die Tragspindel 4 ist mit einem Außengewindeabschnitt 7 ausgestattet, der sich im dargestellten Beispiel in axialer Richtung lediglich über einen begrenzten Teilabschnitt im oberen Abschnitt erstreckt, der sich aber selbstredend über einen längeren Bereich oder aber über nahezu den gesamten bzw. über den gesamten oberen Abschnitt der Tragspindel erstrecken kann.

Die Trageinheit 2 umfasst ferner eine Lasthülse 5, welche die Tragspindel 4 mutterartig oder hülsenartig abschnittsweise axial umschließt und durch welche die Tragspindel 4 axial hindurchragt. Die Lasthülse 5 weist einen zum Außengewindeabschnitt 7 der Tragspindel 4 korrespondierenden Innengewindeabschnitt 8 auf und ist durch Ineinandergreifen der korrespondierenden Gewinde der entsprechenden Außen- und Innengewindeabschnitte 7, 8 verstellbar mit der Tragspindel 4 verbunden. Durch Drehung der Lasthülse 5 gegenüber der Tragspindel 4 kann die Lasthülse 5 in einer vertikalen Richtung Rv zumindest über einen Verstellbereich axial entlang der Tragspindel 4 relativ zu dieser bewegt bzw. verschoben werden, wobei der Verstellbereich unter anderem über die axiale Erstreckung des Außengewindeabschnittes 7 bestimmt wird. In den Figuren zwar nicht dargestellt, sind für die entsprechende Drehung der Lasthülse 5 gegen die Tragspindel 4 sowohl an der Lasthülse 5 als auch an der Tragspindel 4 geeignete Schlüsselflächen für den Angriff entsprechender Schraubschlüssel vorgesehen.

Die Lasthülse 5 dient zur lasttragenden Aufnahme der im Wesentlichen hohlzylinderförmig ausgebildeten Stützeinheit 3, welche schließlich auf der mit der Tragspindel 4 verbundenen Lasthülse 5 lastet, und zwar derart, dass ein oberseitiger freier Endabschnitt 4.1 der Tragspindel 4 axial in einen Innenraum der Stützeinheit 3 hinein ragt. Die Lasthülse 5 weist dazu oberseitig einen Kragenabschnitt 5.1 auf, auf dem ein unteres Auflageendende 3.2 der Stützeinheit 3 aufliegt. Das untere Auflageendende 3.2 der Stützeinheit 3 weist wiederum einen Bodenabschnitt 18 mit einer zentralen Durchgangsöffnung für den Durchgang der Tragspindel 4 auf. Der Bodenabschnitt 18 der Stützeinheit 3 und der Kragenabschnitt 5.1 der Lasthülse 5 stehen dabei in flächigem Kontakt miteinander bzw. liegen flächig aneinander an. Im dargestellten Beispiel sind durch die flächig aneinander anliegenden Boden- und Kragenabschnitte 18, 15 Verschraubungen geführt, um die Boden- und Kragenabschnitte 18, 15 gegeneinander zu fixieren und dadurch die Trageinheit 2 und die Stützeinheit 3 sicher zu verbinden.

Die Stützeinheit 3 weist an einem der Trageinheit 2 abgewandten, maschinenseitigen Ende 3.1 einen Befestigungsabschnitt 17 auf, welcher für die Montage bzw. für die Befestigung an der Behälterbehandlungsmaschine zur Verfügung steht. Im vorliegenden Beispiel ist der Befestigungsabschnitt 17 als deckel- oder plattenartiges Anschlussstück bzw. als Anschlussplatte ausgebildet, welche(s) mithilfe geeigneter Befestigungs- und Verbindungsmittel, beispielsweise mittels Verschraubung, mit einem Gestellteil oder mit einem Maschinenkörperteil der Behälterbehandlungsmaschine fest verbunden werden kann. Die auf dem Befestigungsabschnitt 17 aufliegende bzw. lastende Behälterbehandlungsmaschine stellt somit die Last dar, welche schließlich über die Stützeinheit 3 auf die Lasthülse 5 der Trageinheit 2 übertragen und insgesamt gehalten wird. Die von der Last ausgehenden Kräfte werden somit in axialer Richtung übertragen.

In der Figur 1 zwar nicht dargestellt, können im Bereich der Lasthülse 5 auch entsprechend geeignete Dichtungen vorgesehen sein, welche beispielsweise innenliegend in dem Bereich der Durchführung der Lasthülse 5 angeordnet sind und dichtend gegen die Oberfläche der Tragspindel 4 anliegen. Beispielsweise können entsprechende Dichtungen im unteren Bereich der Lasthülse 5 angeordnet sein. Auch im oberen Bereich können entsprechende Dichtungen vorgesehen sein, die zur horizontalen Fläche hin abdichten.

Der Maschinenfuß 1 weist ferner eine koaxial angeordnete, umfänglich umlaufende Schutzhülse 10 auf, die ebenfalls im Wesentlichen hohlzylinderartig ausgebildet ist und in vertikaler Richtung Rv verschiebbar an die Stützeinheit 3 gekoppelt ist, und zwar derart, dass die Schutzhülse 10 im Wesentlichen konzentrisch um die Stützeinheit 3 herum verläuft. Die Schutzhülse 10 ist relativ zur Stützeinheit 3 derart angeordnet und insbesondere in Bezug auf ihre Form und Dimensionierung so ausgebildet und eingerichtet, dass die Schutzhülse 10 und die Stützeinheit 3 zumindest über einen vorgegebenen Verschiebebereich teleskopartig ineinander- und auseinanderschiebbar sind.

Die Schutzhülse 10 deckt in zumindest einer vertikalen Endstellung P1 die Trageinheit 2 ab, und zwar insbesondere sämtliche Elemente der Trageinheit 2, insbesondere diejenigen, die nicht von der Stützeinheit 3 bedeckt bzw. aufgenommen sind. Dabei deckt die Schutzhülse 10 in der vertikalen Endstellung P1 die Trageinheit 2 vollständig und dichtend gegen die äußere Umgebung ab. Eine axiale Länge der Schutzhülle 10 ist dabei so gewählt, dass auf jeden Fall eine vollständige Abdeckung der Trageinheit 2 in der vertikalen Endstellung P1 gewährleistet ist. Vorzugsweise entspricht die axiale Länge der Schutzhülle 10 dabei etwa einer axialen Länge der Trageinheit 2.

Zum Zwecke einer oberseitigen Abdichtung ist an einem oberseitigen Hülsenende 10.1 der Schutzhülse 10 ein erstes Dichtelement 11 vorgesehen, welches im dargestellten Beispiel ringförmig als Dichtring ausgebildet ist und in Dichtlage zwischen einer Außenseite 12 der Stützeinheit 3 und der Schutzhülse 10 angeordnet ist. Der Dichtring 11 liegt dabei dichtend gegen die Außenseite 12 der Stützeinheit 3 sowie gegen einen inneren Wandungsbereich der Schutzhülse 10 an. Im dargestellten Beispiel ist der Dichtring 11 teilweise in einer umlaufenden Nut 16 im Bereich des oberseitigen Hülsenendes 10.1 aufgenommen.

An einem unterseitigen Hülsenende 10.2 der Schutzhülse 10 ist ein Verbindungsabschnitt 13 zum Herstellen einer Verbindung mit der Basisplatte 6 der Trageinheit 2 vorgesehen, welcher in Figur 1 nur schemenhaft angedeutet, in Figur 2 jedoch mehr im Detail dargestellt ist, so dass im Folgenden ebenfalls Bezug genommen wird auf die Figur 2.

Im dargestellten Beispiel ist der Verbindungsabschnitt 13 zur Ausbildung einer formschlüssigen Verbindung mit der Basisplatte 6, insbesondere zur Ausbildung einer Schnapp- oder Rastverbindung eingerichtet und weist dazu als Rastnasen dienende Vorsprungsbereiche 20 auf, welche mit kommunizierenden Rastelementabschnitten 21 an der Basisplatte 6 in Wirkverbindung treten. Beispielsweise ist dazu an der Basisplatte 6 eine entsprechende Ringrippe oder Schulter als Rastelementabschnitt 21 vorgesehen. Die im Verbindungsabschnitt 13 der Schutzhülse 10 ausgebildeten Vorsprungsbereiche 20 hintergreifen dabei die Ringrippe oder Schulter 21 der Basisplatte, wodurch der Verbindungsabschnitt 13 unter Ausbildung einer Rast- oder Schnappverbindung in der Basisplatte einhakt. Die Schutzhülse 10 kann somit einfach auf die Basisplatte 6 aufgeclipst werden.

Insbesondere ist auch am unterseitigen Hülsenende 10.2 der Schutzhülse 10 im Bereich des Verbindungsabschnittes 13 ein zweites Dichtelement 14 vorgesehen, welches ebenfalls ringförmig als Dichtring ausgebildet ist und in Dichtlage zwischen einer Oberfläche 15 der Basisplatte 6 und der Schutzhülse 10 angeordnet ist, derart, dass der Dichtring 14 dichtend gegen die Oberfläche 15 der Basisplatte 6 sowie gegen einen inneren Wandungsbereich der Schutzhülse 10 anliegt. Im dargestellten Beispiel ist der Dichtring 14 zumindest teilweise in einer umlaufenden Nut 16' im Bereich des Verbindungsabschnittes 13 der Schutzhülse 10 aufgenommen.

Der Maschinenfuß 1 des gezeigten Beispiels ist für eine Verankerung im Boden eingerichtet bzw. für eine Befestigung am Hallenboden ausgelegt und ist als so genannte "erdbebensichere" Variante ausgebildet. Dazu weist die Basisplatte 6 mehrere Durchgangsbohrungen 23 auf, von denen zwei in den Figuren 1 und 2 sichtbar sind. Durch jede der Durchgangsbohrung 23 ist ein Verankerungsmittel 22 für den verankernden Eingriff im Boden geführt. Selbstverständlich kann der Maschinenfuß aber auch ohne einen solchen Verankerungsmechanismus, insbesondere als einfacher Standfuß ohne Durchgangsbohrungen 23 und Verankerungsmittel 22 ausgeführt sein. Bei allen Ausführungsvarianten kann zur Erhöhung der Rutschfestigkeit die als Standfläche ausgebildete Unterseite 6a der Basisplatte 6 mit einer haftvermittelnden Beschichtung versehen sein oder es kann eine haftvermittelnde Schicht, beispielsweise eine Gummimatte dort aufgebracht sein.

Vorteilhaft deckt die Schutzhülse 10 auch die in der Basisplatte 6 vorgesehenen Durchgangsbohrungen 23 und Verankerungsmittel 22 vollständig gegen die Umgebung ab, so dass auch diese funktionalen Elemente des Maschinenfußes 1 gesamtheitlich vor Verschmutzung und Rückstandsablagerungen geschützt sind.

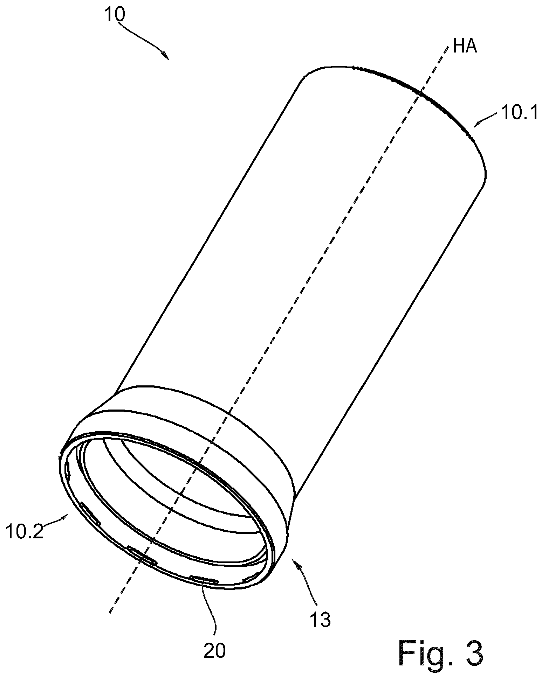

Figur 3 zeigt in einer perspektivischen Ansicht und isoliert dargestellt eine Ausführungsform der Schutzhülse 10. Die im Wesentlichen als Hohlzylinder ausgebildete Schutzhülse 10 weist an ihrem unterseitigen Hülsenende 10.2 im Bereich des Verbindungsabschnittes 13 mehrere Vorsprungsbereiche 20 zur Verrastung mit der Basisplatte 6 der Trageinheit 2 auf. Die Schutzhülse 10 kann aus Edelstahl oder Kunststoff hergestellt sein.

Für die Erstmontage des Maschinenfußes 1, insbesondere für die Montage der Schutzhülse 10 am Maschinenfuß 1 können zum Beispiel zunächst die Tragspindel 4 und die Lasthülse 5 zusammengesetzt und dann die Stützeinheit 3 mit der Lasthülse 5 verbunden werden. Anschließend kann die Schutzhülse 10 beispielsweise von unten her auf die mit der Lasthülse 5 verbundene Tragspindel 4 aufgeschoben und über die Stützeinheit 3 geführt bzw. geschoben werden, so dass schließlich ein dem oberseitigen freien Endabschnitt 4.1 der Tragspindel 4 gegenüberliegendes unteres Ende mit der Basisplatte 6 verbunden werden kann.

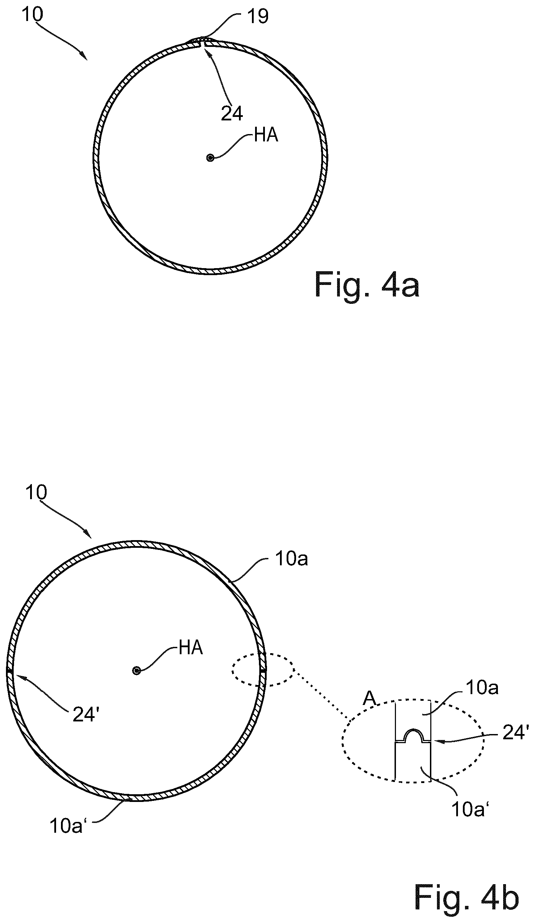

Die Figuren 4a und 4b zeigen schematische Querschnittsansichten von weiteren bevorzugten Ausführungsformen der Schutzhülse 10. Bei Verwendung eines Kunststoffes mit ausreichenden flexiblen oder elastischen Eigenschaften kann die Schutzhülse 10 aus einem gebogenen Flachmaterialstück gebildet sein welches zu einem Zylinder geformt bzw. zu einer im Wesentlichen zylinderförmigen Struktur gebogen ist, wie in Figur 4a dargestellt. Der geformte Zylinder ist ausreichend stabilisiert bzw. stabil, so dass die Zylinderform lediglich durch entsprechende Kraftanwendung aufgebogen werden kann. Dabei sind freie Längskanten des Flachmaterialstücks aneinander anschließend angeordnet und entlang einer Verbindungslinie oder Nahtlinie 24 dichtend und vorzugsweise lösbar miteinander verbunden. Im dargestellten Beispiel ist zur dichtenden Verbindung ein Dichtstreifen 19 entlang der Stoßkanten bzw. entlang der Nahtlinie 24 aufgebracht.

Eine mehrteilige, aus zwei halbschalenförmigen Schutzhülsenteilen 10a, 10a' gebildete Schutzhülse 10 ist in Figur 4b gezeigt. Die halbschalenförmigen Schutzhülsenteile 10a, 10a' sind dichtend miteinander verbunden, um die umfänglich umlaufende Schutzhülse 10 zu bilden. Zur Verbindung der halbschalenförmigen Schutzhülsenteile 10a, 10a' werden die jeweilig benachbarten Längskanten der aneinander anschließenden Schutzhülsenteile 10a, 10a' entlang von Stoßlinien oder Nahtlinien 24' dichtend miteinander verbunden. Beispielsweise sind die Längskanten der Schutzhülsenteile 10a, 10a' dazu profiliert ausgebildet, insbesondere für eine Verbindung nach Art einer Nut-Feder-Verbindung eingerichtet, wie aus dem vergrößerten Ausschnitt A der Figur 4b hervorgeht.

Jedes Schutzhülsenteil 10a, 10a' weist somit eine Längskante mit einer federartigen Profilierung und eine gegenüberliegende Längskante mit einer nutartigen Profilierung auf. Die Schutzhülsenteile 10a, 10a' werden zur Bildung der umlaufenden Schutzhülse 10 so zueinander angeordnet, dass jeweils zwei korrespondierende Längskanten entlang der Nahtlinien 24' unter Ausbildung der nut-feder-artigen Verbindung aneinander anschließen. Dabei können zusätzlich auch Dichtungen (nicht gezeigt), beispielsweise Dichtlippen oder Dichtstreifen eingesetzt werden.

### Bezugszeichenliste

- 1: Maschinenfuß
- 2: Trageinheit
- 3: Stützeinheit
- 4: Tragspindel
- 4.1: oberseitiger freier Endabschnitt der Tragspindel
- 5: Lasthülse
- 5.1: Kragenabschnitt
- 6: Basisplatte
- 6a: Unterseite der Basisplatte
- 6b: Oberseite der Basisplatte
- 7: Außengewindeabschnitt
- 8: Innengewindeabschnitt
- 9: Aufnahmehalterung
- 10: Schutzhülse
- 10a, 10a': Schutzhülsenteile
- 10.1: oberseitiges Hülsenende
- 10.2: unterseitiges Hülsenende
- 11: erstes Dichtelement
- 12: Außenseite der Stützeinheit
- 13: Verbindungsabschnitt
- 14: zweites Dichtelement
- 15: Oberfläche der Basisplatte
- 16, 16': umlaufende Nut
- 17: Befestigungsabschnitt
- 18: Bodenabschnitt
- 19: Dichtstreifen
- 20: Vorsprungsbereich
- 21: Rastelementabschnitte
- 22: Verankerungsmittel
- 23: Durchgangsbohrung
- 24, 24': Nahtlinie
- HA: Hauptachse
- P1: vertikale Endstellung
- Rv: vertikale Richtung

## Patentansprüche

1. Maschinenfuß (1) für Behälterbehandlungsmaschinen umfassend zumindest eine sich entlang einer Hauptachse (HA) erstreckende, höhenausgleichbare Trageinheit (2) und wenigstens eine koaxial zur Trageinheit (2) angeordnete Stützeinheit (3), wobei die Trageinheit (2) zumindest eine Basisplatte (6) und eine mit der Basisplatte (6) verbundene Tragspindel (4) und eine die Tragspindel (4) abschnittsweise axial umschließende Lasthülse (5) umfasst, wobei die Tragspindel (4) zumindest einen Außengewindeabschnitt (7) und die Lasthülse (5) wenigstens einen korrespondierenden Innengewindeabschnitt (8) aufweist, wobei die Lasthülse (5) verstellbar mit der Tragspindel (4) verbunden ist und wobei die Stützeinheit (3) auf der Lasthülse (5) lastet und ein oberseitiger freier Endabschnitt (4.1) der Tragspindel (4) axial in einen Innenraum der Stützeinheit (3) hineinragt, wobei
der Maschinenfuß (1) ferner eine koaxial angeordnete, umfänglich umlaufende Schutzhülse (10) aufweist, **dadurch gekennzeichnet, dass**
die Schutzhülse (10) in einer vertikalen Richtung (Rv) verschiebbar an der Stützeinheit (3) angeordnet ist und wobei die Schutzhülse (10) in zumindest einer vertikalen Endstellung (P1) wenigstens die Trageinheit (2) gegen die Umgebung abdeckt.

2. Maschinenfuß (1) nach Anspruch 1, **dadurch gekennzeichnet, dass** die Schutzhülse (10) und die Stützeinheit (3) im Wesentlichen zylinderförmig ausgebildet und zumindest über einen vorgegebenen Verschiebebereich teleskopartig ineinander- und auseinanderschiebbar angeordnet sind.

3. Maschinenfuß (1) nach Anspruch 1 oder 2, **dadurch gekennzeichnet, dass** wenigstens an einem oberseitigen Hülsenende (10.1) der Schutzhülse (10) zumindest ein erstes Dichtelement (11) vorgesehen ist, wobei das Dichtelement (11) dichtend zwischen einer Außenseite (12) der Stützeinheit (3) und der Schutzhülse (10) angeordnet ist.

4. Maschinenfuß (1) nach einem der Ansprüche 1 bis 3, **dadurch gekennzeichnet, dass** im Bereich eines unterseitigen Hülsenendes (10.2) der Schutzhülse (10) wenigstens ein zweites Dichtelement (14) vorgesehen ist, wobei das Dichtelement (14) dichtend zwischen einer Oberfläche (15) der Basisplatte (6) und der Schutzhülse (10) angeordnet ist.

5. Maschinenfuß (1) nach Anspruch 3 oder 4, **dadurch gekennzeichnet, dass** das erste und/oder das zweite Dichtelement (11, 14) ringförmig in Form eines Dichtringes ausgebildet ist.

6. Maschinenfuß (1) nach Anspruch 5, **dadurch gekennzeichnet, dass** die Schutzhülse (10) im Bereich ihres oberseitigen Hülsenendes (10.1) und/oder im Bereich ihres unterseitigen Hülsenendes (10.2) eine umlaufende Nut (16, 16') zur wenigstens teilweisen Aufnahme des Dichtringes (11, 14) aufweist.

7. Maschinenfuß (1) nach einem der vorhergehenden Ansprüche, **dadurch gekennzeichnet, dass** am unterseitigen Hülsenende (10.2) der Schutzhülse (10) zumindest ein Verbindungsabschnitt (13) zum Herstellen einer lösbaren Verbindung mit der Basisplatte (6) vorgesehen ist.

8. Maschinenfuß (1) nach Anspruch 7, **dadurch gekennzeichnet, dass** der Verbindungsabschnitt (13) zum Herstellen einer formschlüssigen lösbaren Verbindung mit der Basisplatte (6), insbesondere einer Rastverbindung oder Schnappverbindung ausgebildet ist und dazu wenigstens einen als Rastnase dienenden Vorsprungsbereich aufweist.

9. Maschinenfuß (1) nach einem der vorhergehenden Ansprüche, **dadurch gekennzeichnet, dass** die Schutzhülse (10) in der vertikalen Endstellung (P1) die Trageinheit (2) dichtend gegen die Umgebung abdeckt, insbesondere vollständig und dichtend gegen die Umgebung abdeckt.

10. Maschinenfuß (1) nach einem der vorhergehenden Ansprüche, **dadurch gekennzeichnet, dass** an einem der Trageinheit (2) abgewandten maschinenseitigen Ende (3.1) der Stützeinheit (3) ein Befestigungsabschnitt (17) für die Befestigung an der Behälterbehandlungsmaschine vorgesehen ist.

11. Maschinenfuß (1) nach einem der vorhergehenden Ansprüche, **dadurch gekennzeichnet, dass** oberseitig an der Lasthülse (5) ein Kragenabschnitt (5.1) zur tragenden Aufnahme der Stützeinheit (3) vorgesehenen ist und die Stützeinheit (3) auf dem Kragenabschnitt (5.1) auflagert.

12. Maschinenfuß (1) nach einem der vorhergehenden Ansprüche, **dadurch gekennzeichnet, dass** die Stützeinheit (3) an einem dem maschinenseitigen Ende (3.1) gegenüberliegenden Auflageende (3.2) einen Bodenabschnitt (18) mit einer zentralen Durchgangsöffnung für den Durchgang der Tragspindel (4) aufweist, wobei der Bodenabschnitt (18) der Stützeinheit (3) auf der Lasthülse (5) aufliegt und mit dieser verbunden ist.

13. Maschinenfuß (1) nach einem der vorhergehenden Ansprüche, **dadurch gekennzeichnet, dass** die Schutzhülse (10) mehrteilig ausgebildet ist, wobei mehrere halb- oder teilschalenförmige Schutzhülsenteile (10a) dichtend miteinander verbunden sind, um die umfänglich umlaufende Schutzhülse (10) zu bilden.

14. Maschinenfuß (1) nach einem der vorhergehenden Ansprüche, **dadurch gekennzeichnet, dass** die Schutzhülse (10) aus Metall, insbesondere aus Edelstahl, oder aus einem Kunststoff hergestellt ist.

15. Maschinenfuß (1) nach einem der vorhergehenden Ansprüche, **dadurch gekennzeichnet, dass** die Basisplatte (6) eine oder mehrere Durchgangsbohrungen (23) aufweist und Verankerungsmittel (22) für den verankernden Eingriff im Boden vorgesehen sind, welche durch die Durchgangsbohrungen (23) geführt sind.

## Claims

1. A machine foot (1) for container handling machines, comprising at least one height-adjustable carrier unit (2) that extends along a main axis (HA) and at least one support unit (3) arranged coaxially with the carrier unit (2), wherein the carrier unit (2) comprises at least one base plate (6) and a carrying spindle (4) connected to the base plate (6) and a load sleeve (5) axially enclosing the carrying spindle (4) in sections, wherein the carrying spindle (4) has at least one externally threaded section (7) and the load sleeve (5) has at least one corresponding internally threaded section (8), the load sleeve (5) being adjustably connected to the carrying spindle (4) and the support unit (3) resting on the load sleeve (5) and a top-side free end section (4.1) of the carrying spindle (4) projecting axially into an interior space of the support unit (3), the machine foot (1) furthermore having a coaxially arranged protective sleeve (10) running around the periphery, **characterised in that** the protective sleeve (10) is arranged on the support unit (3) so as to be slidable in a vertical direction (Rv) and, in at least one vertical end position (P1), the protective sleeve (10) covers at least the carrier unit (2) against the environment.

2. The machine foot (1) according to claim 1, **characterised in that** the protective sleeve (10) and the support unit (3) are of an essentially cylindrical design and are arranged such that they can be pushed telescopically into and out of one another at least over a predetermined sliding range.

3. The machine foot (1) according to claim 1 or 2, characterised at least one first sealing element (11) is provided at least at a top-side sleeve end (10.1) of the protective sleeve (10), the sealing element (11) being arranged in a sealing manner between an outer side (12) of the support unit (3) and the protective sleeve (10).

4. The machine foot (1) according to any one of claims 1 to 3, **characterised in that** at least one second sealing element (14) is provided in the region of a bottom-side sleeve end (10.2) of the protective sleeve (10), the sealing element (14) being arranged in a sealing manner between a surface (15) of the base plate (6) and the protective sleeve (10).

5. The machine foot (1) according to claim 3 or 4, **characterised in that** the first and/or the second sealing element (11, 14) is/are annular in the form of a sealing ring.

6. The machine foot (1) according to claim 5, **characterised in that** the protective sleeve (10) has a circumferential groove (16, 16') in the region of its top-side sleeve end (10.1) and/or in the region of its bottom-side sleeve end (10.2) for an at least partial reception of the sealing ring (11, 14).

7. The machine foot (1) according to any one of the preceding claims, **characterised in that** at least one connecting section (13) for producing a releasable connection to the base plate (6) is provided on the bottom-side sleeve end (10.2) of the protective sleeve (10).

8. The machine foot (1) according to claim 7, **characterised in that** the connecting section (13) is designed to produce a form-fitting, releasable connection with the base plate (6), in particular a latching connection or snap-on connection, and to this end has at least one projection region serving as a latching lug.

9. The machine foot (1) according to any one of the preceding claims, **characterised in that** in the vertical end position (P1), the protective sleeve (10) covers the carrier unit (2) in a sealing manner against the environment, in particular covers it completely and in a sealing manner against the environment.

10. The machine foot (1) according to any one of the preceding claims, **characterised in that** a fastening section (17) for fastening to the container handling machine is provided on a machine-side end (3.1) of the support unit (3) that faces away from the carrier unit (2).

11. The machine foot (1) according to any one of the preceding claims, **characterised in that** a collar section (5.1) for the supporting accommodation of the support unit (3) is provided on the top side of the load sleeve (5) and the support unit (3) is supported on the collar section (5.1).

12. The machine foot (1) according to any one of the preceding claims, **characterised in that** the support unit (3) has, at a support end (3.2) that is opposite the machine-side end (3.1), a bottom section (18) with a central through-opening for the passage of the carrying spindle (4), the bottom section (18) of the support unit (3) resting on the load sleeve (5) and being connected thereto.

13. The machine foot (1) according to any one of the preceding claims, **characterised in that** the protective sleeve (10) is of a multi-part design, a plurality of semi- or part- shell-shaped protective sleeve parts (10a) being sealingly connected to one another in order to form the circumferentially extending protective sleeve (10).

14. The machine foot (1) according to any one of the preceding claims, **characterised in that** the protective sleeve (10) is made of metal, in particular of stainless steel, or of a plastic.

15. The machine foot (1) according to any one of the preceding claims, **characterised in that** the base plate (6) has one or more through-holes (23) and anchoring means (22) are provided for anchoring engagement in the ground, which are passed through the through-holes (23).

## Revendications

1. Pied de machine (1) pour machines de traitement de récipients comprenant au moins une unité porteuse (2) réglable en hauteur, s'étendant le long d'un axe principal (HA) et au moins une unité de support (3) disposée coaxialement par rapport à l'unité porteuse (2), dans lequel l'unité porteuse (2) comprend au moins une plaque de base (6) et une broche porteuse (4) reliée à la plaque de base (6) et une douille de charge (5) entourant axialement la broche porteuse (4) sur certaines sections, dans lequel la broche porteuse (4) comprend au moins une section filetée extérieure (7) et la douille de charge (5) au moins une section filetée intérieure (8) correspondante, dans lequel la douille de charge (5) est reliée de manière réglable à la broche porteuse (4) et dans lequel l'unité de support (3) pèse sur la douille de charge (5) et une section d'extrémité libre (4.1) supérieure de la broche porteuse (4) dépasse axialement dans un espace intérieur de l'unité de support (3), dans lequel le pied de machine (1) présente en outre une douille de protection (10) périphérique sur le pourtour, disposée de manière coaxiale, **caractérisé en ce que** la douille de protection (10) est disposée sur l'unité de support (3) de manière à pouvoir se déplacer dans une direction verticale (Rv) et dans lequel la douille de protection (10) recouvre au moins l'unité porteuse (2) par rapport à l'environnement dans au moins une position finale verticale (P1).

2. Pied de machine (1) selon la revendication 1, **caractérisé en ce que** la douille de protection (10) et l'unité de support (3) sont réalisées sensiblement de manière cylindrique et disposées de manière à pouvoir se déplacer l'une dans l'autre et l'autre et l'une hors de l'autre de manière télescopique au moins sur une plage de déplacement prédéfinie.

3. Pied de machine (1) selon la revendication 1 ou 2, **caractérisé en ce qu'**au moins un premier élément d'étanchéité (11) est prévu sur une extrémité de douille supérieure (10.1) de la douille de protection (10), dans lequel l'élément d'étanchéité (11) est disposé de manière étanche entre un côté extérieur (12) de l'unité de support (3) et la douille de protection (10).

4. Pied de machine (1) selon l'une quelconque des revendications 1 à 3, **caractérisé en ce qu'**au moins un deuxième élément d'étanchéité (14) est prévu dans la zone d'une extrémité de douille inférieure (10.2) de la douille de protection (10), dans lequel l'élément d'étanchéité (14) est disposé est de manière étanche entre une surface (15) de la plaque de base (6) et la douille de protection (10).

5. Pied de machine (1) selon la revendication 3 ou 4, **caractérisé en ce que** le premier et/ou le deuxième élément d'étanchéité (11, 14) est réalisé de manière annulaire sous la forme d'une bague d'étanchéité.

6. Pied de machine (1) selon la revendication 5, **caractérisé en ce que** la douille de protection (10) présente une rainure (16, 16') périphérique dans la zone de son extrémité de douille supérieure (10.1) et/ou dans la zone de son extrémité de douille inférieure (10.2) pour recevoir au moins partiellement la bague d'étanchéité (11, 14).

7. Pied de machine (1) selon l'une quelconque des revendications précédentes, **caractérisé en ce qu'**au moins une section de liaison (13) est prévue sur l'extrémité de douille inférieure (10.2) de la douille de protection (10) pour établir une liaison libérable avec la plaque de base (6).

8. Pied de machine (1) selon la revendication 7, **caractérisé en ce que** la section de liaison (13) est réalisée pour établir une liaison libérable par coopération de formes avec la plaque de base (6), en particulier une liaison par crantage ou liaison par encliquetage et présente pour cela au moins une zone de saillie servant de nez de crantage.

9. Pied de machine (1) selon l'une quelconque des revendications précédentes, **caractérisé en ce que** la douille de protection (10) dans la position finale verticale (P1) recouvre l'unité porteuse (2) de manière étanche par rapport à l'environnement, en particulier de manière complète et étanche par rapport à l'environnement.

10. Pied de machine (1) selon l'une quelconque des revendications précédentes, **caractérisé en ce qu'**une section de fixation (17) est prévue sur une extrémité côté machine (3.1) de l'unité de support (3) détournée de l'unité porteuse (2) pour la fixation sur la machine de traitement de récipients.

11. Pied de machine (1) selon l'une quelconque des revendications précédentes, **caractérisé en ce qu'**une section de collerette (5.1) est prévue sur le dessus de la douille de charge (5) pour la réception porteuse de l'unité de support (3) et l'unité de support (3) repose sur la section de collerette (5.1).

12. Pied de machine (1) selon l'une quelconque des revendications précédentes, **caractérisé en ce que** l'unité de support (3) présente sur une extrémité d'appui (3.2) opposée à l'extrémité côté machine (3.1) une section de fond (18) avec une ouverture de passage centrale pour le passage de la broche porteuse (4), dans lequel la section de fond (18) de l'unité de support (3) repose sur la douille de charge (5) et y est reliée.

13. Pied de machine (1) selon l'une quelconque des revendications précédentes, **caractérisé en ce que** la douille de protection (10) est réalisée en plusieurs parties, dans lequel plusieurs parties de douille de protection (10a) en forme de demi-coquille ou de coquille partielle sont reliées de manière étanche entre elles pour former la douille de protection (10) périphérique sur le pourtour.

14. Pied de machine (1) selon l'une quelconque des revendications précédentes, **caractérisé en ce que** la douille de protection (10) est fabriquée en métal, en particulier en acier inoxydable, ou en matière plastique.

15. Pied de machine (1) selon l'une quelconque des revendications précédentes, **caractérisé en ce que** la plaque de base (6) présente un ou plusieurs trous de passage (23) et que des moyens d'ancrage (22) sont prévus pour l'insertion par ancrage dans le sol, lesquels sont guidés à travers les trous de passage (23).
